# EUROPEAN PATENT APPLICATION

(11) **EP 2 611 087 A2**
(43) Date of publication of application: **03.07.2013**
(21) Application number: 12197720.1
(22) Date of filing: 18.12.2012
(51) Int. Cl.: H04L 12/927, H04L 29/06

(54) **Application level admission overload control**

(30) Priority: 27.12.2011 US 201113374395
(71) Applicant: Mitel Networks Corporation, Ottawa, ON K2K 2W7 (CA)
(72) Inventor: Gupta, Sudhir, Chandler, AZ Arizona 85286 (US)
(74) Representative: McDougall, James

(57) **Abstract**

Generally described, the present disclosure relates to communications. More specifically, this disclosure relates to application level admission overload control. In one illustrative embodiment, intelligence can be embedded into a communication system so that it can detect and prevent network attacks without the need of costly network and firewall appliances. The communication system can control the in-flow of network packets to help prevent system overload situations through a packet oriented admission policy, connected oriented admission policy or both. By doing so, it not only makes the communication system more robust, secure and cost effective, but also can prevent service interruptions. This can reduce support calls and prove cost-effective to the customer as well as a solution provider. The communication system can protect network applications from internal network traffic and/or attacks.

## Description

### TECHNICAL FIELD

This disclosure generally relates to communication systems, and more particularly, to preventing network attacks and overload situations by controlling connection requests and the inflow of network packets.

### BACKGROUND

Internet Protocol (IP) based communication systems, such as Private Branch Exchanges (PBXs), can be accessible from a public network for many reasons. For example, IP/SIP Trunk service providers can allow the customer PBX to be accessed from the public network. Remote and travelling users can connect with the communication system from the public network. Making communication systems accessible from outside networks, however, can also make it vulnerable to network attacks. IP based communications systems can generally rely on firewalls and special network appliances to prevent network attacks. These appliances can be costly and are complex in nature to configure, maintain and manage.

For small and mid-size businesses (SMBs), which generally do not have an in-house IT department, these additional costs and complexities cannot be justified. Not having these special appliances can make the communication system vulnerable to network attacks that lead to service interruptions. These service interruptions not only impact the business bottom line, but can also increase the support and maintenance cost for the communication system provider.

Communications systems can rely on special hardware and network equipment to detect and prevent network attacks. Even though there are solutions available to detect and prevent Denial of Service (DoS) attacks, most of these solutions can be costly and require additional hardware. In some cases, packet filtering capabilities provided by the underlying operating system of the communications system can be used to prevent unwanted network traffic. However, these solutions generally do not have access to the application context that can help make intelligent decisions in distinguishing legitimate traffic from malicious network packets. For example, it can be desirable to block new call traffic but allow network packets that are part of an existing call session. This behavior can be achieved if the packet filtering component is aware of the application session contexts.

An application level admission overload control is therefore needed that overcomes those issues described above. These, as well as other related advantages, will be described in the present disclosure.

### BRIEF DESCRIPTION OF DRAWINGS

The novel features believed to be characteristic of the disclosure are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
Figure 1 is a block diagram showing an exemplary communication system that is accessible through a network for sharing information in accordance with one or more aspects of the present disclosure;
Figure 2 is a block diagram showing an exemplary admission controller having illustrative components that work together to provide network traffic admission control services to at least one application in accordance with one or more aspects of the present disclosure;
Figure 3 is a flow chart showing illustrative processes for admission control in packet-oriented network applications in accordance with one or more aspects of the present disclosure;
Figure 4 is a flow chart showing illustrative processes for controlling incoming network packets by blacklisting remote addresses in accordance with one or more aspects of the present disclosure;
Figure 5 is a flow chart showing illustrative processes for employing packet gapping through preferential treatment in accordance with one or more aspects of the present disclosure;
Figure 6 is a flow chart showing illustrative processes for admission control in connection oriented applications in accordance with one or more aspects of the present disclosure;
Figure 7 is a flow chart showing illustrative processes for controlling connection requests by blacklisting remote addresses in accordance with one or more aspects of the present disclosure; and
Figure 8 is a flow chart showing illustrative processes for employing a connection gapping policy in accordance with one or more aspects of the present disclosure.

### DESCRIPTION OF THE DISCLOSURE

The description set forth below in connection with the appended drawings is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the scope of this disclosure.

Generally described, the present disclosure relates to communications. More specifically, this disclosure relates to application level admission overload control. In one illustrative embodiment, intelligence can be embedded into a communication system so that it can detect and prevent network attacks without the need of costly network and firewall appliances. The communication system can control the in-flow of network packets to help prevent system overload situations through a packet oriented admission policy, connected oriented admission policy or both. By doing so, it not only makes the communication system more robust, secure and cost effective, but also can prevent service interruptions. That in turn can reduce support calls and prove cost-effective to the customer as well as a solution provider. The communication system can protect network applications from internal network traffic and/or attacks.

Numerous advantages can be offered by the illustrative embodiment described above. The communication system can be more cost-effective for both the customer and the provider as no additional hardware or equipment is used. Since the communication system can have access to the application context and session information, it can make intelligent decisions while distinguishing legitimate network traffic from malicious network traffic. Other solutions generally do not provide access to the application context and are not able to distinguish legitimate network traffic from malicious traffic. Feedback from the application context can be used to adjust control parameters for gapping incoming traffic in order to help prevent system overload situations. Previous implementations did not have a mechanism to receive feedback from applications to control incoming traffic intelligently. The existing solutions are mainly focused on protecting network applications from external network traffic and/or attacks. However, the communication system can protect network applications from external as well as internal network traffic and/or attacks. Many additional advantages of the present disclosure will become apparent to those skilled in the relevant art as provided for in the following description.

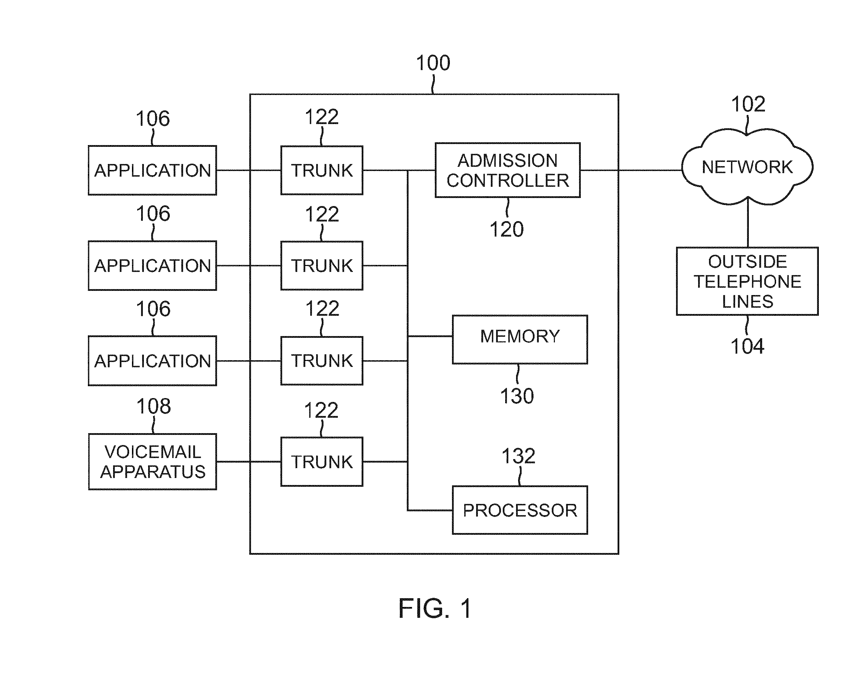

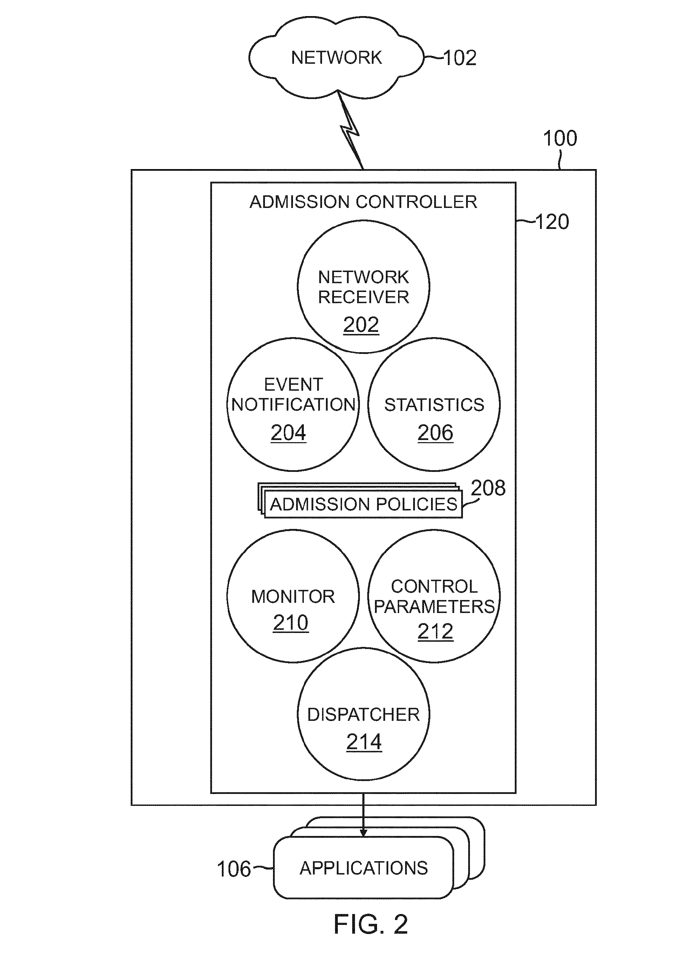

An exemplary communication system for application level admission overload control will be described in Figure 1. Figure 2 will provide exemplary components for an admission controller within the communication system. In this disclosure, packet admission control can be provided by the communication system by itself or in combination with connection admission control. Other embodiments will become apparent from the description provided below.

Turning now to Figure 1, a block diagram showing an exemplary communication system 100 that is accessible through a network 102 for sharing information in accordance with one or more aspects of the present disclosure is provided. The system 100 can be a Private Branch Exchange (PBX), telephone exchange or other device. The system 100 can connect to a network 102. In turn, the network 102 can be connected with outside telephone lines 104.

The communication system 100 can be connected to different types of networks 102. These networks 102 can include, but are not limited to, a local area network (LAN), wide area network (WAN), personal area network (PAN), campus area network (CAN), metropolitan area network (MAN), global area network (GAN) or combination thereof. Such networking environments are commonplace in office networks, enterprise-wide computer networks, intranets and the Internet, which are all types of networks. The network 102 used can depend on the device connecting with the system 100 through the outside telephone lines 104. External or internal networks 102 can be used.

Multiple applications 106 can run on or with the communication system 100. Applications 106 running on the system 100 can serve different purposes and can use different control parameters to prevent overload situations. For example, enterprise software, accounting software, office suites and media players can be a few of the applications 106. Within the system 100, a voicemail apparatus 108 can be provided.

The system 100 can configure and adapt different control parameters as used by each application 106 on the system 100. The applications 106 can provide their context to help the system 100 make intelligent decisions in distinguishing legitimate traffic from malicious network packets. For example, it can be desirable to block new call traffic, but allow network packets that are part of an existing call session. This behavior can be achieved if the packet filtering component is aware of the application session context.

Continuing with Figure 1, the communication system 100 can be connected to the network 102 through an admission controller 120. The controller 120 can filter out malicious and unwanted network packets. The controller 120 can allow legitimate network packets and messages to the applications 106. Through the trunks 122 of the system 100, connection requests and packets can be provided to the applications 106 and voicemail apparatus 108. The controller 120 can provide a multi-step process which applies to connection-oriented (Transmission Control Protocol (TCP)) as well as connection-less (User Datagram Protocol (UDP)) network traffic. The controller 120 can protect network applications 106 from malicious network traffic from an outside network 102 as well as an internal network.

The communication system 100 can have memory 130 that can be used by the admission controller 120. The memory 130 can include volatile memory (Random Access Memory (RAM)) and non-volatile memory (Read Only Memory (ROM)), flash memory or the like. The non-volatile portion of the memory 130 can be used to store persistent information which should not be lost when the system 100 is powered down. Within the ROM, can be Basic Input/Output System (BIOS) software for defining a firmware interface. Within the memory 130, the system 100 can include an operating system (OS) stored in the RAM, which can manage programs. The OS can reside in the memory 130 and be executed on one or more processors 132.

While the communication system 100 has been primarily described as a PBX, the features and functions presented below can be incorporated into other communication systems 100. These systems 100 can include fewer or additional components and can be mobile or not. Furthermore, the applications 106 can be internal to the communication system 100.

Figure 2 is a block diagram showing an exemplary admission controller 120 having illustrative components that work together to provide network traffic admission control services to at least one application 106 in accordance with one or more aspects of the present disclosure. The controller 120 can contain and control various sub-components that work together in cooperation with the application 106 to provide network traffic admission control services. Fewer or more components can be implemented within the controller 120.

The admission controller 120 is the main component that can be responsible for providing admission and overload control service to the application 106. The controller 120 controls and applies functions provided by its sub-components. As shown within Figure 2, the controller 120 can include sub-components. A network receiver 202, event notification 204, statistics 206, admission policies 208, monitor 210, control parameters 212 and dispatcher 214 can be provided within the controller 120. These sub-components can be within memory 130 on the communication system 100 or another location. When executed by the processor 132, these sub-components can control connection requests and incoming packets. The sub-components can be connected through logical or physical connections.

The network receiver 202 of the admission controller 120 can be responsible for listening and receiving packets from the network 102 and devices connected to the outside telephone lines 104. In a connection oriented transport protocol (such as TCP), the receiver 202 can also be responsible for listening and receiving network connections. The receiver's functions can be controlled by the admission controller 120, for example, when to start and stop listening and receiving connections and packets from the network 102. The admission controller 120 can tell the receiver 202 what network ports and transport to listen and receive packets from.

The admission controller 120 can maintain a number of control parameters 212. The sub-components within the controller 120 can use these parameters 212 to manipulate connection requests and incoming packets. The parameters 212 within the admission controller 120 can include the type of network protocol being used, for example, TCP/TLS and UDP. Port numbers, admission policies 208, application thresholds, event notification configurations and enable or disable various component functions can be maintained using the parameters 212.

These control parameters 212 can be manipulated at run-time or through an exposed user interface (Command Line, Web Interface, Simple Network Management Protocol (SNMP), etc.) to control the admission control behavior. For example, admission control policies 208 can be enabled or disabled at run-time. The threshold values to drop or stop listening for network packets can be manipulated at run-time.

Admission policies 208 can contain a list of control policies that decide when and what connections and/or packets should be dropped. The policies 208 can be an ordered list of policies that are applied sequentially, but do not necessarily have to be. Generally described, a packet can be allowed when the enabled policies 208 pass it before it is dispatched to the application 106. If a policy 208 happens to reject a packet, the policy 208 can indicate what action to take through an event notification 204. For example, the actions can include dropping the packet, marking the remote address as blacklisted and stop receiving further packets or connections for a specified amount of time. A policy 208 can be enabled or disabled at run-time through the control parameters 212.

As further shown in Figure 2, the admission controller 120 can include an event notification 204. The event notification 204 can be responsible for generating event notifications during system operation. For example, when a packet is dropped, a remote address can be blacklisted. The event notification 204 can be in the form of an event log in a file, SNMP trap notification, email notification to an administrator, etc. depending on configuration and implementation choice.

A monitor 210 can be responsible for monitoring the health of the admission controller 120 and application 106 in order to determine an overload situation. An overload situation can be defined by lagging messages. The monitor 210 of the admission controller 120 can manipulate the control parameters 212 to adapt admission control behavior as a response to different overload conditions. The monitor 210 can provide a feedback mechanism from the application 106 to the controller 120. For example, if the application 106 queues reach a configurable threshold size, the monitor 210 can indicate that the application 106 is lagging behind in processing incoming messages. The monitor 210 can manipulate the parameters 212 so that the controller 120 can lower the influx of network packets.

Statistics 206 can be kept by the admission controller 120. This sub-component can be responsible for collecting various statistics that would be of interest to an application 106 and application administrator. For example, total packet count, dropped packet count, total connection count, dropped connection count, etc. A dispatcher 214 can be responsible for dispatching incoming packets to an application 106. Generally, packets that are allowed by the enabled admission control policies 208 reach the application 106 through the dispatcher 214.

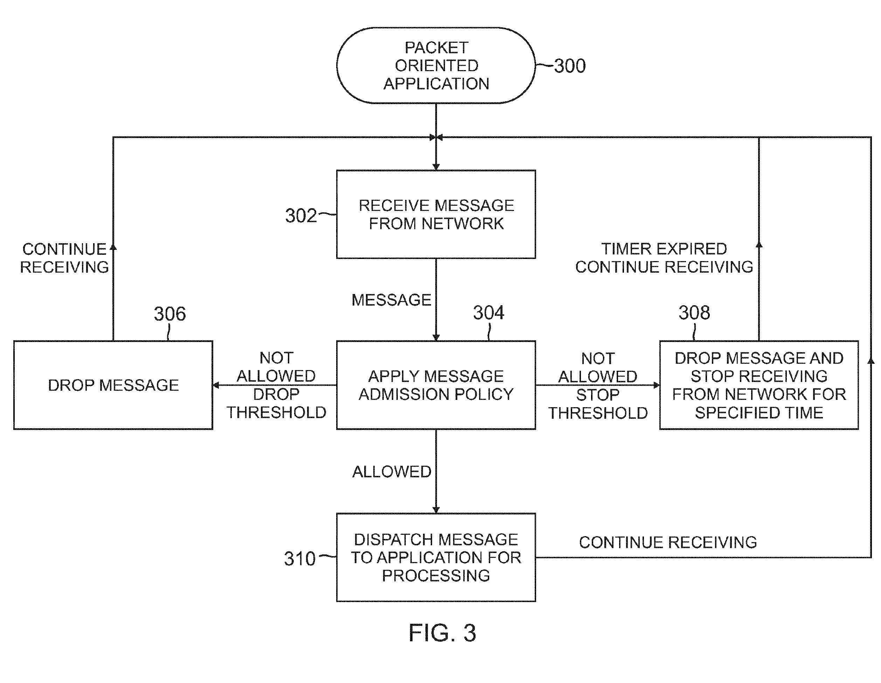

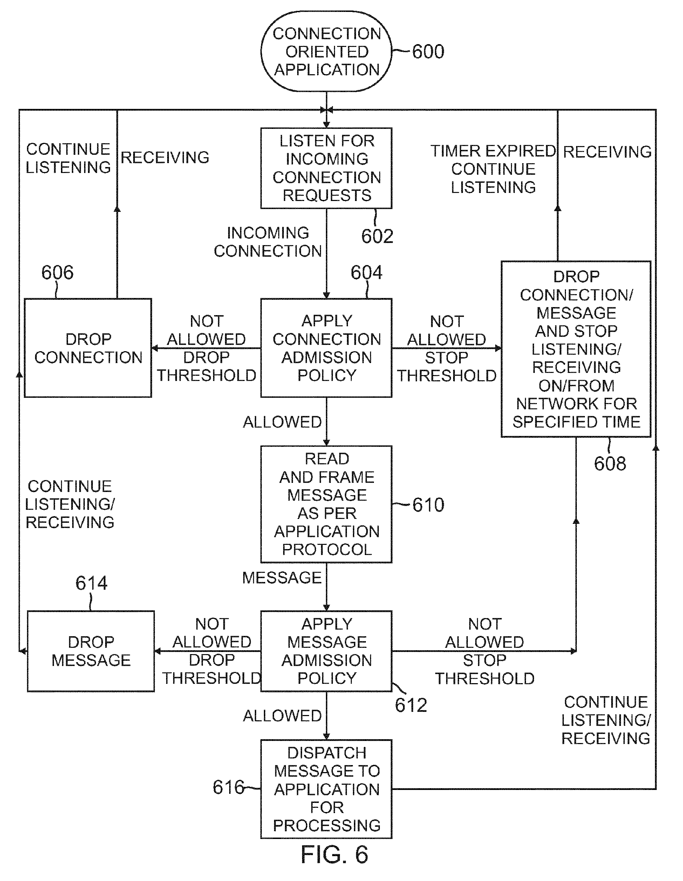

While the sub-components were shown as being in a centralized location, these components can be outside of the admission controller 120 and at different locations. The functionality and behavior of the controller 102 can be described in terms of packet-oriented network applications 106 and connection-oriented network applications 106. In packet-oriented network applications 106, for example applications 106 that listen and receive UDP packets from the network 102, admission control is applied to incoming network packets as illustrated by FigureS 3 through 5. In case of applications 106 that receive network traffic through connection oriented transport protocols, for example TCP, admission controls can be applied as illustrated in FigureS 6 through 8. Applications 106 can be both packet-oriented and connection-oriented.

Referring to Figure 3, a flow chart showing illustrative processes for admission control in packet-oriented network applications 106 in accordance with one or more aspects of the present disclosure is provided. Fewer or more processes can be used and will become apparent from those skilled in the relevant art. The processes can begin at block 300.

For packet oriented application admission control, an application 106 can initialize the admission controller 120 with application 106 specific configuration and control parameters 212 on startup. In turn, the controller 120 can initialize its sub-components based on the provided configuration and control parameters 212. A message can be received by the network receiver 202 at block 302. The message can include one or more packets.

At block 304, the admission controller 120 can apply admission policies 208 before dispatching the message to the application 106, which will be described in more details below. If admission policies 208 allow the message, the message can be dispatched to the application 106 at block 310. The controller 120 can continue to receive messages from the network 102 at block 302.

When the messages are rejected at block 304 through the admission policies 208, the message and its packets can be dropped. The message alone can be dropped when the number of packets reaches a drop threshold and below a stop threshold at block 306. The controller 120 can continue to receive messages from the network 102 at block 302. Alternatively, the message can be dropped and the network receiver 202 on the admission controller 120 can stop receiving messages from the network 102 for a specified time when the packets reaches above a stop threshold at block 308. The controller 120 can stop receiving messages for a period of time and receive messages after the time expires. It can also be determined if a remote network address should be put into the blacklist if the rate of incoming network packets from that host is more than the allowed threshold values.

For packet admission control, the admission policies 208 that can be applied at block 304 can include, but are not limited to, a blacklist policy 208 and packet gapping policy 208. Typically, the blacklist policy 208 can be applied before the packet gapping policy 208. Those skilled in the relevant art will appreciate that there are a number of different admission policies 208 that can be implemented by the admission controller 120 for packet control.

A number of lists for blacklisting the sources can be maintained by the admission controller 120 and can be stored in memory 130. A static blacklist can be a predefined list of remote addresses that are deemed as blacklisted. Packets coming from these remote addresses can be dropped without further checking. Generally, the static blacklist can be created from a number of known malware sites or other remote sources that can bog down the communications system 100. The list can be updated when the system 100 is powered down. This list can also be updated at run-time through a control parameter mechanism.

A dynamic blacklist can also be created and used by the admission controller 120. This list can be generated at run-time. During the course of operation, the application 106 can receive packets from remote addresses, or sources, and the controller 120 can determine when a remote address should be put in this blacklist to temporarily block further incoming packets from that remote address. This can be performed on-the-fly or dynamically and depend on current, as well as previous, usage of the remote address.

The admission controller 120 can also specify an exception or white list of remote addresses. A predefined list of remote addresses that are deemed as safe can be noted within the controller 120 and blacklist policies 208 would not be applied to packets from these addresses. Other control policies 208 might still apply to packets from these remote addresses. This list generally contains internal network addresses and/or trusted network addresses.

A number of control parameters 212 can be used to maintain the blacklist policy 208. A blacklist threshold (BT) can define the number of packets that are permitted within the time interval specified by a blacklist threshold interval (BTI) from each remote address. The BTI can represent the interval (in seconds) that can be used to determine the rate of incoming packets as per threshold limit. It can define the interval (in seconds) within which a specified number of packets (defined by BT) can be permitted from a remote address.

A blacklist refresh period (BRP) can define the period (in seconds) by when the admission controller 120 checks the dynamic blacklist to find and remove remote addresses that have been there for at least the duration specified by a blacklist expire period (BEP). The controller 120 can schedule a repeated timer for the BRP duration. At the expiration of each timer event, the controller 120 can remove the stale remote address entries from the dynamic blacklist.

A BEP can define the period (in seconds) that determines how long a remote address should stay in the dynamic blacklist once marked as blacklisted. The BEP determines how long the admission controller 120 does not receive packets from a remote address. An overload factor (OF) can define a current overload condition of an application 106 and can be determined by the monitor 210. The OF can have a value ranging from o representing an overloaded condition to 1 representing an idle condition. Generally, the OF can be a percentage for representing the amount that the application 106 is overloaded. This value can affect the BT of the blacklist policy 208. The BT can be recalculated using the OF before applying the blacklist policy 208. For example, if the monitor 210 determines that the application is in an overload condition and the overload factor is 0.2, then the actual BT used is BT 0.2. The resulting value can be rounded to the nearest higher integer value.

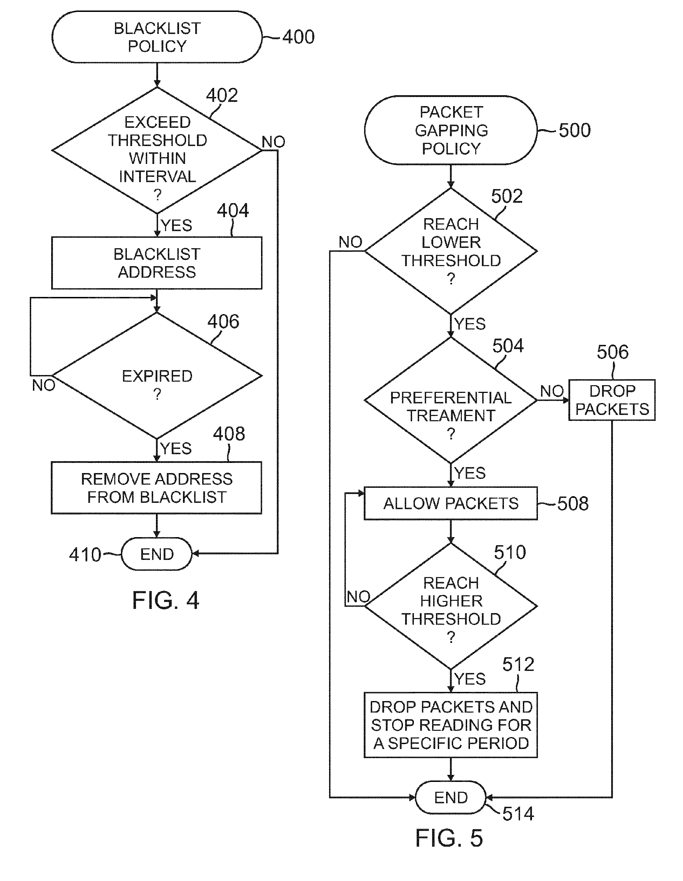

Figure 4 is a flow chart showing illustrative processes for controlling incoming network packets by blacklisting remote addresses in accordance with one or more aspects of the present disclosure. The blacklist policy 208 can be the first applied and is typically applied before any other admission policy 208 in packet admission control. The policy 208 can help in controlling the incoming rate of network packets for each remote address. Alternatively, it can be used to process incoming network packets from remote addresses. It can maintain a data structure for a list of remote addresses within memory 130 of the communication system 100. Sources with the remote addresses can be blacklisted dependent on the number of packets received. Application of the blacklist policy 208 can begin at block 400.

The communication system 100 can begin receiving packets. For each remote address, the blacklist policy 208 applied to incoming packets can maintain a current packet count (CPC) value for each threshold interval. At decision block 402, the admission controller 120 can determine whether the CPC for a remote address is greater than the actual threshold value BT within a threshold interval BTI, that is, whether CPC ≥ (OF * BT). If not, the incoming number of packets from the remote address is within an acceptable level and processes for blacklisting the remote address can end at block 410.

If the number of packets from a remote address within a BTI exceeds the BT, then that remote address can be marked as blacklisted at block 404. The remote address can be placed in the dynamic blacklist described above. A corresponding time can be noted when the remote address was blacklisted. After a remote address is marked as blacklisted, it can stay in the dynamic blacklist at least for the duration specified by BEP. The admission controller 120 can periodically check the dynamic blacklist at decision block 406 to determine if the remote address should be taken out of the list because it has been in this list at least for the duration specified by BEP. This period is determined by the BRP control parameter of blacklist policy 208. Once the time expires, the remote address can be taken out of the blacklist at block 408. The network packets from this address are allowed again as long as the rate is within the threshold limits. If the rate exceeds the threshold limits, then it is put back again in the blacklist. This control policy 208 helps in admission control and overload control per remote address. The processes can end at block 410.

A packet gapping policy 208 can be applied by the admission controller 120. This policy 208 can determine the overall rate of incoming packets from the network 102 and can employ preferential treatment to some of the incoming packets based on the type or content of the packets. This preferential characteristic can be specific for each application 106. One application 106 can employ preferential treatment while another does not. If a preferential characteristic is employed, then this policy 208 maintains a data structure or list of message types that can be given preferential treatment. The data can be stored within memory 130 of the communication system 100. In addition to dropping a packet, this policy 208 can determine if the admission controller 120 should stop listening and receiving packets for a specified period of time.

A number of variables or values can be used by the packet gapping policy 208. A gapping threshold low (GTL) value can define the total number of packets that are permitted within an interval specified by a gapping threshold interval (GTI) before dropping any subsequent packets. When preferential packet treatment is used, then those packets that are not categorized as preferred messages are dropped until reaching a higher threshold level.

A gapping threshold high (GTH) value can define a higher threshold value than the GTL. The GTH can be used to determine if all subsequent incoming packets, including preferred messages, are dropped for a time period specified by a gapping expire period (GEP). GTI can define the interval (in seconds) that is used to determine the rate of incoming packets as per threshold low and high limits.

The GEP can define the period (in seconds) that determines for how long the admission controller should stop receiving any new incoming packets from remote addresses. The GEP determines how long the admission controller 120 does not receive any packets from a source.

An overload factor (OF) can also be used by the packet gapping policy 208. The OF can be the same control parameter as defined in the blacklist policy 208 and can be determined by the monitor 210. This value can affect the GTL and GTH of the gapping policy 208. The gapping thresholds can be recalculated as per this factor before applying the gapping control policy 208. For example, if the monitor 210 can determine that the application is in an overload condition and the OF is 0.2, then the actual gapping thresholds used are GTL * 0.2 and GTH * 0.2. The resulting value can be rounded to the nearest higher integer value.

Figure 5 is a flow chart showing illustrative processes for employing preferential treatment through packet gapping in accordance with one or more aspects of the present disclosure. The processes can begin at block 500. After the blacklist policy 208 is applied, the gapping policy 208 can manage preferred packets. Packets that can be given preferential treatment can be those applications 106 having priority such as an operating system application that manages system controls.

At decision block 502, the admission controller 120 can determine whether the number of incoming packets reaches the GTL within each threshold interval GTI. If not, the number of packets can be processed without overloading the application 106 and the communication system 100. The processes can end at block 514. When the number of incoming packets reaches the GTL, then subsequent packets can be generally dropped. However, at decision block 504, preferential treatment of the incoming packets can be checked. When the packets are not preferred, then the packets can be dropped at block 506 and the processes can end at block 514.

When the packets have preferential treatment, then packets that are categorized as preferred are permitted until reaching the GTH at block 508. At decision block 510, the admission controller 120 can determine whether the higher threshold limit GTH has been reached. If the GTH has not been reached, preferred packets can still be allowed. Upon reaching the higher threshold limit GTH, all the subsequent packets are dropped and the network receiver 202 can be instructed to stop reading for a specified period GEP at block 512. As a result, packets received during this period are dropped. On the expiry of the GEP, the admission controller 120 can instruct the network receiver 202 to start receiving packets again and admission control can be repeated. The processes can end at block 514.

The OF, described above, can be used to adjust threshold limits. For example, the GTH and GTL can be modified by the OF for an application 106. This control policy 208 helps in a collective admission and overload control from all remote addresses.

In applications 106 that receive network traffic through connection oriented transport protocols, for example TCP, a multi-process admission control can be applied. Figure 6 is a flow chart showing illustrative processes for admission control in connection oriented applications 106 in accordance with one or more aspects of the present disclosure. Generally described, a first process can apply connection admission control and the second process can be the packet admission control, as described above. If the connection admission control permits the connection, the message is first framed as per the application protocol and packet admission control process is applied. The packet admission control process works the same way as that of packet admission control in packet-oriented applications. The processes can begin at block 600.

On startup, the application 106 can initialize the admission controller 120 with application specific configuration and control parameters 212. The controller 120 in turn, can initialize its sub-components based on the provided configuration and control parameters 212. At block 602, the controller 120 can listen for incoming connection requests. When a connection request is received by the network receiver 202, the admission controller 120 can apply network admission policies 208 at block 604, which will be described below.

If the connection requests are above a drop threshold, then no other connections are allowed. At block 606, the incoming connections can be dropped. The network receiver 202 can continue to listen and receive incoming connection requests at block 602. When incoming connection requests are above a stop threshold, the admission controller 120 can drop the connection at block 608. The controller 120 can also tell the network receiver 202 to stop listening/receiving connections/messages on/from the network 102 for a specified time. After the time expires, the network receiver 202 can continue to listen and receive messages at block 602.

When the connection request is allowed, the admission controller 120 can read and frame the message based on a protocol used by the application 106 at block 610. If network admission policies 208 allow the connection, the further processing of this connection is subject to packet admission control at block 612. The packet admission control process, as defined for packet oriented application 106, can then be applied to these messages.

When the received packets are above a drop threshold and below a stop threshold, the message is dropped at block 614. The network receiver 202 can continue to listen and receive incoming connection requests at block 602. When the packets are above a stop threshold, the message is dropped at block 608. The controller 120 can also tell the network receiver 202 to stop receiving messages from the network 102 for a specified time. After the time is expired, the network receiver 202 can continue to listen and receive messages at block 602.

If the message is allowed through the admission policy 208, the controller 120 can dispatch the message to the application 106 for processing. The network receiver 202 can continue to listen and receive messages at block 602.

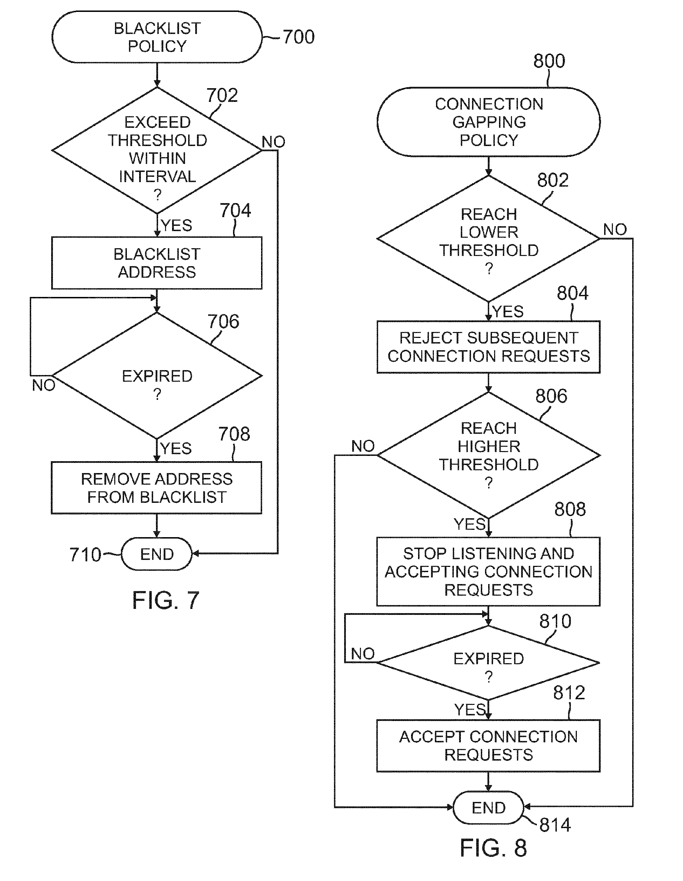

The connection admission control, as described in block 604, can include a blacklist policy 208 (Figure 7) and connection gapping policy 208 (Figure 8). The blacklist policy 208 can use similar processes as the packet admission control process with the exception that it can be applied to connection requests instead of incoming packets. Generally, the blacklist policy 208 as applied to connection requests can be the first applied policy 208 before other control policies 208 in the admission controller 120. The blacklist policy 208 can help in controlling the incoming rate of network connections for each remote address. It can also maintain lists of remote addresses.

A static blacklist can be a predefined list of remote addresses that are deemed as blacklisted. Connection requests from these remote addresses can be dropped without further checking. A dynamic blacklist can be a list generated at run-time as the application 106 receives connection requests from remote addresses. The admission controller 120 can determine if a remote address should be put in this blacklist to temporarily block further connection requests from that remote address.

An exception or white list can be a predefined list of remote addresses that are deemed as safe. Typically, the blacklist policy 208 is not applied to the connection requests from these addresses. Other control policies 208 can apply to connection requests from these remote addresses. This list generally contains internal network addresses and/or the trusted network addresses.

The blacklist policy 208 defines a number of control parameters 212. These parameters 212 can apply to dynamic blacklists. These control parameters 212 can be different than that of the blacklist policy control parameters in packet admission control.

A blacklist threshold (BT) can define the number of connection request that are permitted within the time interval specified by the blacklist threshold interval (BTI) from each remote address. The BTI can define the interval (in seconds) that is used to determine the rate of incoming connection requests as per threshold limit. It can define the interval (in seconds) within which a specified number of connection requests (defined by BT) are permitted from a remote address.

A blacklist refresh period (BRP) can define the period (in seconds) by when the admission controller 120 checks the dynamic blacklist to find and remove remote addresses that have been there for at least the duration specified by a blacklist expire period (BEP). The admission controller 120 can schedule a repeated timer for the BRP duration and at the expiry of each timer event, it can remove the stale remote address entries from the dynamic blacklist so that the subsequent connection requests from these remote addresses can be accepted as long as within allowed threshold limits. The BEP can defines the period (in seconds) that determines for how long a remote address should stay in the dynamic blacklist once marked as blacklisted.

An overload factor (OF) can be a similar control parameter 212 defined in the blacklist policy 208 described above. OF can be determined by the monitor 210. The OF can have a value ranging from o (overloaded) to 1 (no overload) and can determine the overload percentage of an application 106. This value can affect the BT of this blacklist policy 208. The BT can be recalculated as per this factor before applying the blacklist policy 208. For example, if the monitor 210 determines that the application is in an overload condition and the OF is 0.2, then the actual blacklist threshold used can be BT * 0.2. The resulting value is rounded to the nearest higher integer value.

Figure 7 is a flow chart showing illustrative processes for controlling connection requests by blacklisting remote addresses in accordance with one or more aspects of the present disclosure. The processes can begin at block 700. The communication system 100 can begin receiving connection requests. At decision block 702, a determination can be made whether the connection requests exceed a threshold BT within the BTI. For each remote address, this policy 208 can maintain a current connection count (CCC) value for each threshold interval.

If the number of connection requests from a remote address within a BTI does not exceed the BT, then the processes can end at block 710. If the current connection count for a remote address is greater than the actual threshold value, CCC ≥ (OF * BT) within a threshold interval BTI, then that remote address is deemed blacklisted for a period of BEP at block 704. Once a remote address is marked as blacklisted, it can stay in the dynamic blacklist at least for the duration specified by BEP. At decision block 706, the admission controller 120 can periodically check the dynamic blacklist to determine if a remote address should be taken out of the list because it has been in this list at least for the duration specified by the BEP. This period can be determined by the BRP of the blacklist policy 208.

Once the BEP expires, at block 708, the remote address can be taken out of the blacklist. The connection requests from this address can be allowed again as long as the rate is within the threshold limits. If the rate exceeds the threshold limits, then it is put back again in the blacklist. The processes can end at block 710. The blacklist policy 208 can help in admission control and overload control for each remote address.

A connection gapping policy 208 can be applied after the blacklist policy 208. The policy 208 can work similar to the packet gapping policy 208 defined in the packet admission control process with the exception that it can be applied to connection requests instead of incoming packets and it does not employ preferential treatment. This policy 208 can determine the overall rate of incoming connection requests from the network 102. In addition to rejecting connection requests, this policy 208 can also determine if the admission control 120 should stop listening and accepting connection requests for a specified period of time.

A number of control parameters 212 can be defined by this policy 208. A gapping threshold low (GTL) value can define the total number of connection requests that are permitted within the interval specified by a gapping threshold interval (GTI) before rejecting subsequent connection requests. A gapping threshold high (GTH) value can define the higher threshold value that determines if subsequent connection requests are rejected for a time period specified by a gapping expire period (GEP).

The GTI can define the interval (in seconds) that can be used to determine the rate of connection requests as per threshold (low and high) limits. The GEP can define the period (in seconds) that determines for how long the admission controller should stop listening for any new connections from remote addresses. An overload factor (OF) can be a similar control parameter 212 as defined in the blacklist policy 208 and can be determined by the monitor 210. This value can affect the GTL and GTH of the gapping policy 208. The gapping thresholds can be recalculated as per this factor before applying the gapping control policy 208. For example, if the monitor 210 component determines that the application is in overload condition and the OF is 0.2, then the actual gapping thresholds used are GTL * 0.2 and GTH 0.2. The resulting value can be rounded to the nearest higher integer value.

Figure 8 is a flow chart showing illustrative processes for dropping connection requests in accordance with one or more aspects of the present disclosure. The processes can begin at block 800. After applying the blacklist policy 208 described above, the connection requests can be determined if the GTL is reached within the GTI at decision block 802. When the GTL has not been reached, the processes for the connection gapping policy 208 can end at block 814.

Within each threshold interval GTI, if the number of connection requests reaches the GTL, then subsequent connection requests are rejected within that interval at block 804. At decision block 806, a determination can be made whether the connection requests have reached the GTH. If not, the processes can end at block 814. If the rate of incoming connection requests reaches the GTH, the network receiver 202 can be instructed to stop listening and accepting connections for a specified period GEP at block 808. As a result, connection requests received during this period are rejected. At decision block 810, the expiration of the GEP can be checked. On the expiration of the GEP, at block 812, the admission controller 120 can instruct the network receiver 202 to start listening and accepting connection requests again and the admission control process can be repeated. The processes can end at block 814. The gapping policy 208 can use the OF to adjust the threshold limits. This control policy 208 can help in a collective admission and overload control from remote addresses.

Various embodiments of the present disclosure can be programmed using an object-oriented programming language, such as SmallTalk, Java, C++, Ada or C#. Other object-oriented programming languages can also be used. Alternatively, functional, scripting, and/or logical programming languages can be used. Various aspects of this disclosure can be implemented in a non-programmed environment, for example, documents created in HTML, XML, or other format that, when viewed in a window of a browser program, render aspects of a GUI or perform other functions. Various aspects of the disclosure can be implemented as programmed or non-programmed elements, or any combination thereof.

The technology described herein can be implemented as logical operations and/or modules. The logical operations can be implemented as a sequence of processor-implemented steps executing in one or more computer systems and as interconnected machine or circuit modules within one or more computer systems. Likewise, the descriptions of various component modules can be provided in terms of operations executed or effected by the modules. The resulting implementation is a matter of choice, dependent on the performance requirements of the underlying environment in which the described disclosure is implemented. The logical operations making up the embodiment of the disclosure described herein are referred to variously as operations, steps, objects, or modules. It should be understood that logical operations can be performed in any order, unless explicitly claimed otherwise or a specific order is inherently necessitated by the claim language.

The methods and processes described in the disclosure can be embodied as code and/or data, which can be stored in a non-transitory computer-readable storage medium as described above. When a computer system reads and executes the code and/or data stored on the non-transitory computer-readable storage medium, the computer system performs the methods and processes embodied as data structures and code and stored within the non-transitory computer-readable storage medium. Furthermore, the methods and processes described can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

In software implementations, computer software and/or data is stored on a machine readable medium as part of a computer program product, and is loaded into a computer system or other device or machine via a removable storage drive, hard drive, or communications interface. Computer programs, also called computer control logic or computer readable program code, are stored in a main and/or secondary memory, and executed by one or more processors, controllers, or the like to cause the one or more processors to perform the functions of the disclosure as described herein.

The figures and examples above are not meant to limit the scope of the present disclosure to a single embodiment, as other embodiments are possible by way of interchange of some or all of the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present disclosure, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A method to provide packet-admission control comprising:
calculating an overload factor for an application; and
accepting a threshold of packets for said application adjusted by said overload factor.

2. The method of claim 1, comprising dropping packets above said threshold.

3. The method of claim 1, comprising dropping packets from a source when a number of said packets exceed a defined value within a time interval.

4. The method of claim 3, comprising accepting said packets from said source when an expiration period elapses.

5. The method of any preceding claim, wherein accepting a threshold of packets for said application adjusted by said overload factor comprises defining a threshold value, multiplying said threshold value with said overload factor and rounding up said multiplied threshold value to define said threshold of packets.

6. The method of claim 5, wherein multiplying said threshold value with said overload factor comprises aggregating said threshold value with an overload factor ranging from o representing overloaded to 1 representing idle.

7. The method of any of claims 1 to 6, comprising accepting a higher threshold of packets adjusted by said overload factor when receiving preferred packets and optionally comprising dropping packets when a number of said preferred packets are above said higher threshold.

8. A communication system comprising:
at least one processor; and
a memory operatively coupled to said processor, said memory storing program instructions that when executed by said processor, causes said processor to:
control admission of connection requests;
frame messages for said connection requests;
accept a threshold of packets for said messages.

9. The communication system of claim 8, wherein controlling admission of connection requests comprises denying requests when a number of said requests exceed a predefined threshold.

10. The communication system of claim 8, wherein controlling admission of connection requests comprises dropping requests from a source when a number of said requests from said source exceeds a defined value within a time interval and accepting said requests from said source when an expiration period elapses.

11. The communication system of any of claims 8 to 10, wherein controlling admission of connection requests comprises accepting a threshold of connection requests adjusted by an overload factor for an application.

12. The communication system of claim 8, wherein controlling admission of connection requests comprises denying subsequent connection requests when said connection requests reach a lower threshold limit.

13. The communication system of claim 12, wherein controlling admission of connection requests comprises disregarding said connection requests for a defined period when said connection requests reaches a higher threshold limit and/or wherein controlling a number of connection requests comprises adjusting said lower threshold limit and higher threshold limit with an overload factor.

14. A system comprising:
an admission controller providing control services to at least one application, wherein said at least one application provides feedback to said admission controller to remove lagging messages by modifying control parameters within said admission controller.

15. The system of claim 14, wherein said lagging messages define an overload situation and/or wherein modifying control parameters lowers an influx of network packets and/or wherein a monitor of said admission controller provides said feedback and/or wherein said admission controller removes lagging messages by providing a packet oriented admission policy, connected oriented admission policy or both.
